# EUROPEAN PATENT SPECIFICATION

(11) **EP 4 677 413 B1**
(45) Date of publication and mention of the grant of the patent: **21.10.2026**
(21) Application number: 24714020.5
(22) Date of filing: 29.02.2024
(51) Int. Cl.: G02C 7/10

(54) **OPHTHALMIC DEVICE THAT CORRECTS VISUAL DEFECTS AND PROTECTS FROM SUNLIGHT**
OPHTHALMISCHE VORRICHTUNG MIT KORREKTUR VON VISUELLEN DEFEKTEN UND SCHUTZ VOR SONNENLICHT
DISPOSITIF OPHTALMIQUE QUI CORRIGE DES DÉFAUTS VISUELS ET PROTÈGE DE LA LUMIÈRE DU SOLEIL

(30) Priority: 09.03.2023 IT 202300004362
(43) Date of publication of application: 14.01.2026
(73) Proprietor: Out of S.r.l., 25135 Brescia (IT)
(72) Inventor: RIGHI, Federico, 25135 BRESCIA (IT); RIGHI, Roberto, 25135 BRESCIA (IT)
(74) Representative: Gualeni, Nadia
(86) International application number: PCT/IB2024/051947
(87) International publication number: WO 2024/184747

(56) References cited:
- EP-A1- 4 020 066
- CN-A- 106 094 257
- CN-A- 106 773 126
- JP-A- 2019 124 916
- US-A1- 2014 092 328
- US-A1- 2023 066 173

## Description

The object of the present invention is a variable transmittance ophthalmic device, i.e., a device, such as a lens, that is both corrective (of visual defects) and protective (from sunlight).

The need for visual correction is increasingly prevalent within the ophthalmic sector not only for work or reading activities but also for activities such as driving or the practice of sports, including outdoor sports. In these situations an attempt is also made to entrust the lens with the task of protecting against ultraviolet and/or some visible radiation in such a way as to ensure maximum comfort and safety for the user.

Known within the sector are some lens solutions that are both corrective and protective at the same time.

The most common and simplest solution involves the use of mirroring treatments and/or pigments within the material that is used to make the ophthalmic lens, employing the same method used for obtaining lenses that are specifically for protection from sunlight. This solution is however faced with the impossibility of obtaining a lens that is suitable both in situations of strong lighting and in cases of low lighting.

Another known solution includes the use of two lenses applied to the same device, one protective and one corrective. In the majority of cases the protective lens may if necessary be removed, thereby allowing for some flexibility of use. However, in sports practice or while driving, changes in ambient lighting are so sudden and frequent that the removal and/or reapplication of the protective lens is essentially impractical, effectively preventing any intervention in order to adapt the device.

Also known are photochromic lenses with photosensitive pigments that are capable of changing the degree of visible light absorption based upon the amount of incident ultraviolet light. These lenses allow the device to be used both inside and in the open. Also in this case however, the lengths of time for adapting are too long to render the compensation effective in the case of sudden light changes. Furthermore, in certain situations, such as when driving inside a cabin, ultraviolet light only minimally reaches the photochromic lens, which is in fact unable to activate the photosensitive pigments. Another limitation of this type of solution lies in the alteration in the behavior of photochromic lenses as the temperature varies.

Known within the sector are devices for electronically controlling transmittance, for example electrochromic devices that use particle or liquid crystal dispersion, which allow for better control of the transmittance of a lens together with reduced adaptation periods. These devices are produced in sheets and the structure and composition thereof make them substantially impossible to thermoform. For this reason, they may not in fact be integrated into corrective lenses that require a double curvature.

Furthermore, documents US 2014/092328 A1, US 2023/066173 A1 and CN 106 094 257 A show ophthalmic devices with a variable transmittance.

The object of the present invention is that of implementing a variable transmittance ophthalmic device that is fast and effective and that may be manufactured on a large scale. In other words, the object of the present invention is that of providing a device, for example a lens, this is both corrective (of visual defects) and protective (from sunlight).

This object is achieved by means of a variable transmittance ophthalmic device according to claim 1. The dependent claims disclose further advantageous embodiments of the invention.

The features and advantages of the variable transmittance ophthalmic device according to the present invention will appear more clearly from the following description, made by way of an indicative and nonlimiting example with reference to the accompanying figures, wherein:
- Figures 1 and 2 show a variable transmittance ophthalmic device in a front view and a rear view, respectively;
- Figure 3 shows the device of Figure 1 in a cross-section view along the vertical plane;
- Figure 4 shows the device of Figure 1 in a cross-section view along the horizontal plane;

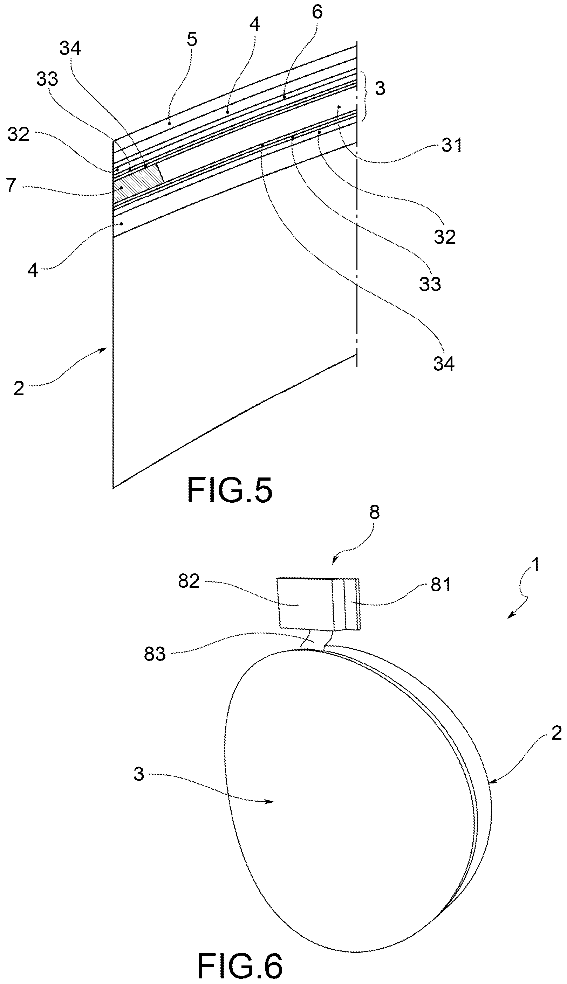

- Figure 5 shows an enlargement of a detail of Figure 4, in such a way as to render visible those layers that compose the variable transmittance ophthalmic device, in an exemplary embodiment;
- Figure 6 shows an example of using the device of Figure 1 provided with a transmittance control device, such as for example an electronics board powered by a photovoltaic cell;
- Figure 7 shows an example of using a pair of variable transmittance ophthalmic devices not being part of the claimed subject-matter, with a single transmittance control element;
- Figure 8 shows an example of using a variable transmittance ophthalmic device according to the present invention, with a support that supports the transmittance control element;
- Figure 9 shows an example of using a variable transmittance ophthalmic device according to the present invention, wherein the support is connected to a frame;
- Figure 10 is a graph that represents the relationship between ambient light (on the horizontal axis) and the transmittance (on the vertical axis) of a variable transmittance ophthalmic device according to the present invention;
- Figure 11 is a graph that represents the relationship between ambient light (on the horizontal axis) and the perceived light (on the vertical axis) of a variable transmittance ophthalmic device according to the present invention;
- Figure 12 is a graph that represents the relationship between ambient light (on the horizontal axis) and the perceived light (on the vertical axis) of a traditional lens with a Visible Light Transmission (VLT) of 30%;
- Figure 13 is a graph that represents the relationship between ambient light (on the horizontal axis) and the perceived light (on the vertical axis) of a traditional photochromic lens.

With reference to the accompanying figures, indicated in the entirety thereof with the numeral 1 is a variable transmittance ophthalmic device.

The variable transmittance ophthalmic device 1 comprises at least one corrective lens 2, for correcting visual defects, coupled to one protective layer 3, for protecting from ambient light.

The corrective lens 2 has a lens body 21 having a surface and an opposite surface.

The surface of the corrective lens 2 has a non-zero Gaussian curvature (positive or negative), and the opposite surface of the corrective lens 2 has a Gaussian curvature equal to zero.

A positive Gaussian curvature corresponds to a concave or convex surface; a negative Gaussian curvature corresponds to a saddle; a zero Gaussian curvature means that the surface is flat in at least one direction.

The protective layer 3 is coupled to the corrective lens 2 at the opposite surface with Gaussian curvature equal to zero. This solution is particularly advantageous in the case wherein the protective layer 3 is a liquid crystal film of the Guest-Host (GH) type. When an attempt is made to couple a liquid crystal film, which by definition is thin, to a corrective lens, which is more rigid and has a double curvature (non-zero Gaussian), the film adjusts to the profile of the lens, deforming itself and accumulating internal stresses. Given that the liquid crystal film comprises two layers containing liquid, several compression-stressed areas are created at the substrate that is not directly bonded to the lens, which may "arch" itself slightly, increasing the distance thereof from the opposite substrate. Type GH liquid crystals are particularly affected by the increase in this distance: the areas of the liquid crystal film in which the distance between the liquid crystal layers is altered become dark even in the absence of a potential difference and impair correct vision. In the solution that is the object of the present invention, the corrective lens 2 is constructed in such a way as to have a flat surface at least in one direction (zero Gaussian) and indeed it is to this flat surface that the protective layer 3 is coupled. The liquid crystal film must therefore follow only one curve of the lens, deforming itself much less and accumulating far fewer internal stresses.

In the example shown in the Figures from 1 to 4, the ophthalmic device 1 comprises a corrective lens 2 provided with a surface 22 and an opposite surface 23. The surface 22 has a positive Gaussian curvature and the opposite surface 23 has a Gaussian curvature equal to zero. The protective layer 3 is coupled to the corrective lens 2 at the opposite surface 23 with Gaussian curvature equal to zero.

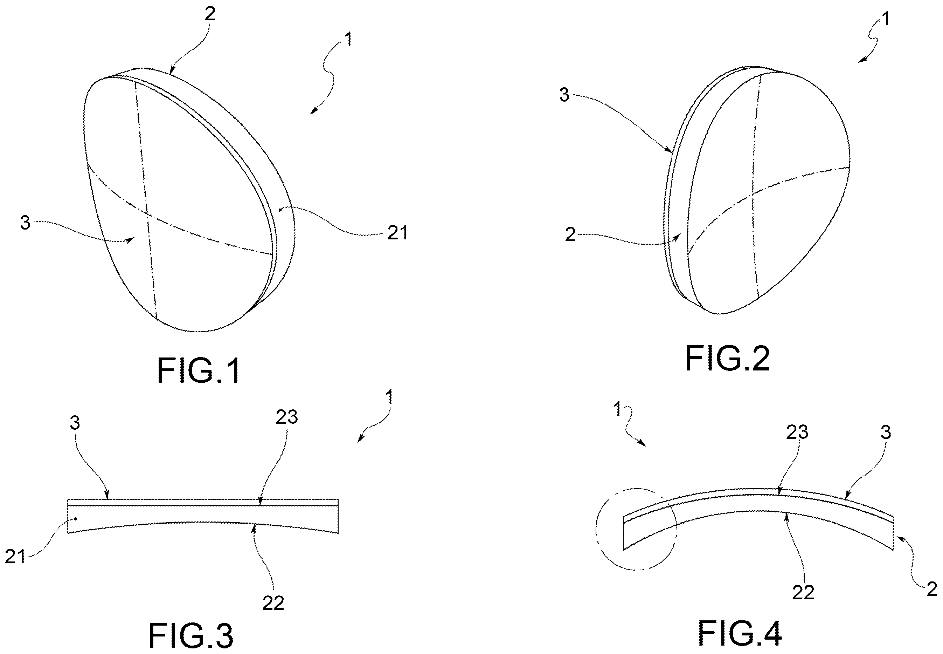

In the example shown in Figures 1 and 2, the surface of the corrective lens 2 with non-zero Gaussian curvature is the one facing the eyes of the user. In one alternative exemplary embodiment on the other hand, the surface opposite the corrective lens 2 with Gaussian curvature equal to zero is the one facing the eyes of the user.

Preferably, the surface with Gaussian curvature equal to zero, whereupon the protective layer 3 is applied, has a cylindrical shape.

Preferably, the surface with non-zero Gaussian curvature is substantially toric in shape.

According to the invention, the protective layer 3 is an electrochromic film.

The protective layer 3 is a liquid crystal film.

The protective layer 3 is a Guest-Host type liquid crystal film.

Preferably, the liquid crystals of the protective layer 3 have a negative dielectric coefficient.

The liquid crystals preferably have a preferential orientation of the molecules, in the absence of an electric field, that is substantially perpendicular to the surface of the protective layer 3.

The variable transmittance protective layer 3 is preferably applied to the corrective lens 2 by means of an optically transparent glue layer 4.

The glue layer preferably has a thickness between 0.01 mm and 0.5 mm.

The liquid crystal layer 31 is preferably surrounded, along the outer perimeter thereof, by a seal 7. Advantageously, the seal 7, in addition to preventing leakage of the liquid crystals, prevents infiltration of unfiltered light from the liquid crystal film 31 at the edge of the protective layer 3.

The protective layer 3 is preferably a multilayer structure comprising in order: a substrate 32, a transparent conductive layer 33, an alignment layer 34, the liquid crystal layer 31, an alignment layer 34, a transparent conductive layer 33, a substrate 32.

The variable transmittance ophthalmic device 1 preferably also comprises a tempered glass layer 5, applied to the protective layer 3 on the opposite side with respect to the corrective lens 2. The tempered glass layer 5 is preferably applied to the protective layer 3 by means of an optically transparent glue layer 4.

The variable transmittance ophthalmic device 1 preferably also comprises a depolarizing layer 6, applied to the protective layer 3 on the opposite side with respect to the corrective lens 2.

In the case wherein both the tempered glass layer 5 and the depolarizing layer 6 are present, the depolarizing layer 6 is arranged between the tempered glass layer 5 and the protective layer 3.

The depolarizing film advantageously eliminates any polarization of the light entering the liquid crystal film 31, especially in the case wherein this film is preceded by an additional layer with internal stresses. The internal stresses of any layer applied to the liquid crystal film would in fact partially polarize the incoming light, based upon the orientation of the internal stresses and thus in a different manner from point to point. In conjunction with the liquid crystal film, which is also optically anisotropic, the two polarizations partially interfere therebetween creating the so-called "rainbow effect", thus compromising correct vision. The depolarizing film, therefore, prevents such a situation from occurring.

The depolarizing effect is preferably achieved by means of a birefringent film characterized by a wave phase shift between the two optical axes of greater than 1500nm.

The ophthalmic device 1 also comprises a transmittance control device 8 comprising an electronic circuit 81 mainly powered by at least one photovoltaic cell 82 and connected to the protective layer 3 by means of a connector 83. The connector 83 is preferably of the FPC, Flexible Printed Circuit, type.

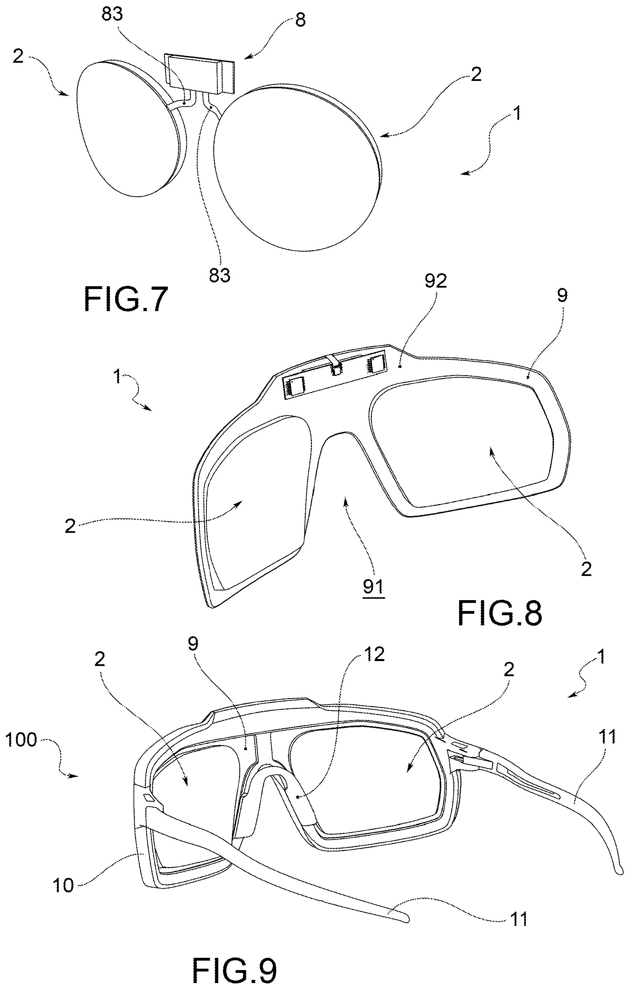

Figure 7 shows an example of an ophthalmic device 1 not being part of the claimed subject-matter. In this example, two corrective lenses 2, each provided with the relative protective layer 3, share the same transmittance control device 8. As may be seen, the transmittance control device 8 comprises two connectors 83, each connected to the relative protective layer 3.

Figure 8 shows an example of the ophthalmic device 1 in accordance with the present invention. In this example, two corrective lenses 2, each provided with the relative protective layer 3, are integrated into a support 9 that also supports the transmittance control device 8. The support 9 at least partially surrounds both of the corrective lenses 2. The support 9 preferably completely surrounds both of the corrective lenses 2. The support 9 is preferably equipped with a central recess 91 that is capable of accommodating the nose of the user.

The support 9 is preferably provided with an upper central portion 92, in which the transmittance control device 8 is housed. The control device 8 is preferably arranged centrally above the corrective lenses 2.

According to the invention, the corrective lenses 2 are made as one piece together with the support 9. A single body is thus created. In this example, the opposite surface with zero Gaussian curvature is a surface that extends to cover both the surface 9 and the corrective lenses 2 and the protective layer 3 is applied to such surface, therefore covering both of the corrective lenses 2.

In a different example not being part of the claimed subject-matter, the corrective lenses 2 are elements that are separate from the support 9 and attached thereto by means of gluing, or welding, or either mechanically or by interlocking.

Figure 9 shows another example of an ophthalmic device 1 according to the present invention. In this example, the support 9 is connected to a frame 10 having a pair of foldable temples 11 to allow the device to be worn. In this example therefore, the two corrective lenses 2, each with the relative protective layer 3, are used to make eyeglasses 100 that are corrective (of visual defects) and protective (from sunlight).

The frame 10 is preferably provided with a compartment in which the control device 8 is housed. The compartment is preferably arranged centrally above the corrective lenses 2, in such a way as to not result in a reduction in the field of view of the user.

In one embodiment, the compartment is sealed, i.e., leak-proof and protects the control device 8.

The frame 10 preferably comprises a nose pad 12 housed within the central recess 91 of the support 9.

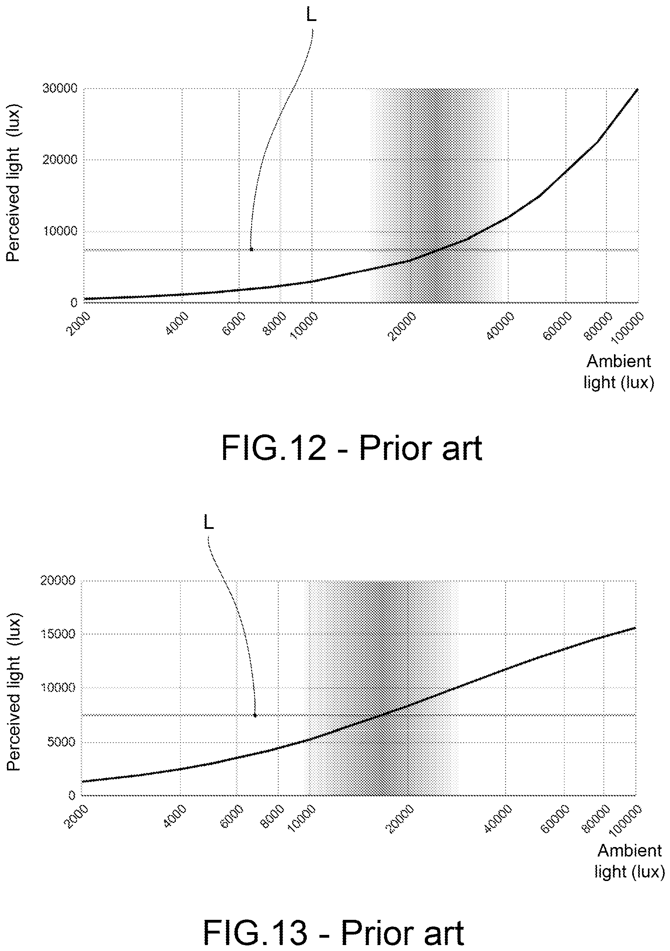

Figure 12 is a graph that represents the relationship between ambient light and the perceived light of a traditional lens with a VLT of 30%. Visible Light Transmission (or VLT) measures the quantity of light that passes through the lens and reaches the eyes. If, for example, a lens has a VLT of 30%, this means that it allows 30% of the light to pass through the lens, blocking the remaining 70%. The gray horizontal line L indicates the optimum lighting level for the practice of sports activities, defined as 7,500 Lux. The area indicated with the gray shading on the graph indicates the optimal wearing range of the lens under analysis. In the case of the traditional lens with a VLT of 30%, this lens is suitable for a specific light condition, namely between 2,000 and 3,000 Lux of ambient light.

A similar graph is represented in Figure 13 which analyses the same relationship in the case of the use of a typical photochromic lens. Although the objective of a photochromic lens is to have the right transparency in every situation, in reality the activation curve of the pigments is poorly controllable. The transparency of the filter typically begins to decrease considerably long before it has reached the optimal lighting level. In fact, photochromic lenses also have a limited optimal range, in this case between 1,500 and 2,000 Lux of ambient light.

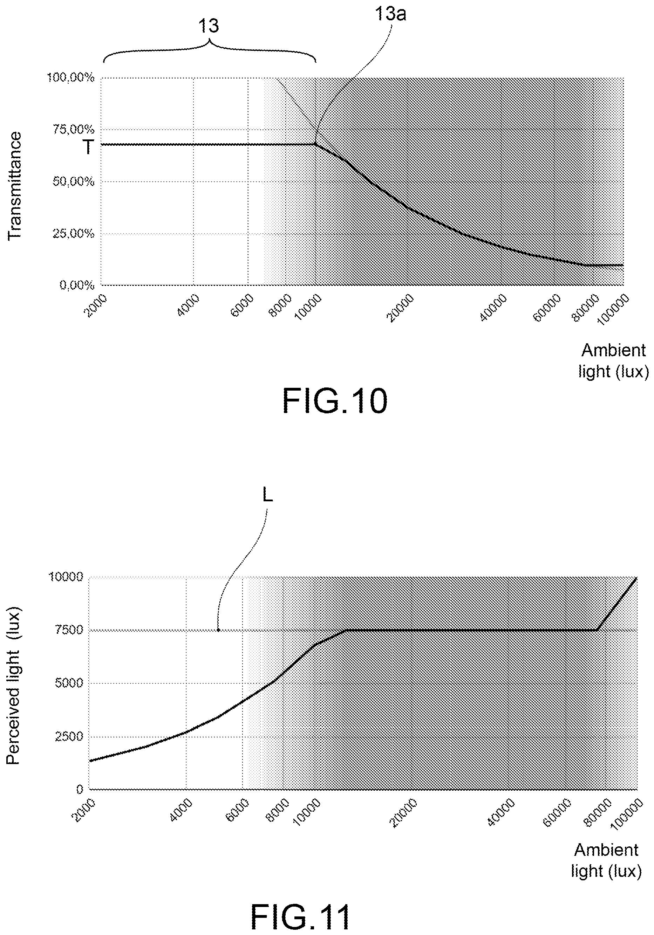

Figure 10 shows the relationship between ambient light and the transmittance of an ophthalmic device 1 according to the present invention. As may be seen from the graph, advantageously the ophthalmic device 1 maintains, by means of the transmittance control device 8, the liquid crystals of the protective layer 3 in a deactivated state, and therefore of greater transmittance, when the ambient light falls within a defined range of low light 13, for example between 2,000 and 10,000 Lux. The low light range 13 is determined based upon a threshold point 13a, calculated by dividing the optimal lighting level, defined as 7,500 Lux, by the maximum level of transparency of the device 1. The low light range 13 is defined as the ambient lighting level less than, or less than or equal to, the threshold point 13a. The threshold point 13a therefore represents the limit below which the lighting level perceived by the user by means of the ophthalmic device 1, in the configuration of maximum transparency, is lower than the optimal lighting level (7,500 Lux) and consequently it is appropriate that the liquid crystals of the protective layer 3 should remain totally deactivated in the maximum transparency state thereof. On the other hand, above the threshold point 13a the transparency of the protective layer 3 is made to decrease as the ambient lighting increases, according to the function indicated in the graph of Figure 10, until reaching the minimum transparency level of the protective layer 3.

Preferably, within the low light range 13, the determination of the transmittance level T of the liquid crystals of the protective layer 3 is determined using the following formula: $Transmittance T - 7 , 500 Lux / \left(t*la\right)$ where:
"t" is the transmittance of the other components of the ophthalmic device 1, such as for example of the corrective lens 2, and where present for example of the tempered glass layer 5, of the depolarizing layer 6;
"la" is the ambient light level in Lux.

The graph in Figure 11 shows the relationship between ambient light and the light perceived by a user wearing an ophthalmic device according to the present invention. The resulting curve is the consequence of controlling the transmittance of the liquid crystals of the protective layer 3 shown in the graph of Figure 10. By virtue of the ophthalmic device 1 it is possible to obtain optimal perceived illumination over a wide range of ambient luminosities.

Innovatively, the variable transmittance ophthalmic device in accordance with the present invention is both corrective (of visual defects) and protective (from sunlight) and ensures optimal perceived illumination on the part of the user over a wide range of ambient luminosities.

Advantageously, with the solution that is the object of the present invention, the corrective lens is constructed in such a way as to have a flat surface at least in one direction (zero Gaussian) and indeed it is to this flat surface that the protective layer is coupled so that the liquid crystal film must follow only one curvature of the lens, deforming itself much less and accumulating far fewer internal stresses.

Advantageously, the variable transmittance ophthalmic device in accordance with the present invention may comprise a depolarizing layer that eliminates any polarization of the light entering the liquid crystal film, thereby preventing the so-called "rainbow effect".

It is understood that a person skilled in the art, in order to meet contingent needs, could make modifications to the device described above, all of which are contained within the scope of protection as defined by the following claims.

## Claims

1. An ophthalmic device (1) comprising:
- a pair of corrective lens (2) of visual defects, having a surface and an opposite surface, wherein the surface has a non-zero Gaussian curvature, and the opposite surface has a Gaussian curvature equal to zero;
- at least one protective layer (3) against ambient light, wherein said protective layer has a variable transmittance controllable by an electrical signal, and is coupled to both said corrective lens (2) at the opposite surface with Gaussian curvature equal to zero, said protective layer (3) being a Guest-Host type liquid crystal panel;
- a control device (8) with an electronic circuit (81) mainly powered by at least one photovoltaic cell (82), said control device (8) being suitable for generating the electrical signal for controlling the transmittance of the protective layer (3);
**characterized in that** said corrective lenses (2) are made in one piece with a support (9), wherein the opposite surface with Gaussian curvature equal to zero is a common surface of the corrective lenses (2) and the support (9), and the protective layer (3) extends to cover both corrective lenses (2).

2. Ophthalmic device (1) according to claim 1, wherein the support (9) completely surrounds both corrective lenses (2).

3. Ophthalmic device (1) according to claim 1 or 2, wherein said support (9) is provided with an upper central portion (92) in which the transmittance control device (8) is housed.

4. Ophthalmic device (1) according to any one of the preceding claims, wherein said support (9) is connected to a frame (10) having a pair of foldable temples (11), said frame (10) being provided with a compartment in which the control device (8) is housed.

5. Ophthalmic device (1) according to claim 4, wherein said compartment is arranged centrally above the corrective lenses (2) and is sealed leak-proof and protects the control device (8).

6. Ophthalmic device (1) according to any one of the preceding claims, wherein the surface with Gaussian curvature equal to zero is cylindrical.

7. Ophthalmic device (1) according to any one of the preceding claims, wherein the surface with non-zero Gaussian curvature is substantially toric in shape.

8. Ophthalmic device (1) according to any one of the preceding claims, wherein the protective layer (3) is applied to the corrective lens (2) by means of an optically transparent glue layer (4) having a thickness between 0.01 mm and 0.5 mm.

9. Ophthalmic device (1) according to any one of the preceding claims, comprising a tempered glass layer (5), applied to the protective layer (3) on the opposite side with respect to the corrective lens (2).

10. Ophthalmic device (1) according to any one of the preceding claims, comprising a depolarizing layer (6) applied to the protective layer (3).

11. Ophthalmic device (1) according to any one of the preceding claims, wherein the protective layer (3) is a multilayer structure comprising in order: a substrate (32), a transparent conductive layer (33), an alignment layer (34), a liquid crystal layer (31), an alignment layer (34), a transparent conductive layer (33), a substrate (32).

12. Ophthalmic device (1) according to any one of the preceding claims, wherein the liquid crystal layer (31) is surrounded, along an outer perimeter thereof, by a seal (7).

## Patentansprüche

1. Ophthalmische Vorrichtung (1), umfassend:
- ein Paar Korrekturlinsen (2) für visuelle Defekte, die eine Oberfläche und eine gegenüberliegende Oberfläche aufweisen, wobei die Oberfläche eine Gaußsche Krümmung ungleich null aufweist und die gegenüberliegende Oberfläche eine Gaußsche Krümmung gleich null aufweist;
- mindestens eine Schutzschicht (3) gegen Umgebungslicht, wobei die genannte Schutzschicht eine durch ein elektrisches Signal steuerbare variable Lichtdurchlässigkeit aufweist und mit beiden genannten Korrekturlinsen (2) an der gegenüberliegenden Oberfläche mit einer Gaußschen Krümmung gleich null gekoppelt ist, wobei es sich bei der genannten Schutzschicht (3) um ein Flüssigkristallpanel vom Typ Guest-Host handelt;
- eine Steuereinrichtung (8) mit einer elektronischen Schaltung (81), die hauptsächlich von mindestens einer Photovoltaikzelle (82) gespeist wird, wobei die genannte Steuereinrichtung (8) geeignet ist, das elektrische Signal zur Steuerung der Lichtdurchlässigkeit der Schutzschicht (3) zu erzeugen;
**dadurch gekennzeichnet, dass** die genannten Korrekturlinsen (2) aus einem Stück mit einer Halterung (9) gefertigt sind, wobei die gegenüberliegende Oberfläche mit einer Gaußschen Krümmung gleich null eine gemeinsame Fläche der Korrekturlinsen (2) und der Halterung (9) bildet und die Schutzschicht (3) beide Korrekturlinsen (2) abdeckend verläuft.

2. Ophthalmische Vorrichtung (1) nach Anspruch 1, wobei die Halterung (9) beide Korrekturlinsen (2) vollständig umschließt.

3. Ophthalmische Vorrichtung (1) nach Anspruch 1 oder 2, wobei die genannte Halterung (9) mit einem oberen Mittelteil (92) versehen ist, in dem die Steuereinrichtung (8) für die Lichtdurchlässigkeit untergebracht ist.

4. Ophthalmische Vorrichtung (1) nach einem beliebigen der vorangegangenen Ansprüche, wobei die genannte Halterung (9) mit einem Gestell (10) verbunden ist, das ein Paar klappbarer Bügel (11) aufweist, wobei das genannte Gestell (10) mit einem Fach versehen ist, in dem die Steuereinrichtung (8) untergebracht ist.

5. Ophthalmische Vorrichtung (1) nach Anspruch 4, wobei das genannte Fach mittig über den Korrekturlinsen (2) angeordnet und auslaufsicher abgedichtet ist und die Steuereinrichtung (8) schützt.

6. Ophthalmische Vorrichtung (1) nach einem beliebigen der vorangegangenen Ansprüche, wobei die Oberfläche mit Gaußscher Krümmung gleich null zylindrisch ist.

7. Ophthalmische Vorrichtung (1) nach einem beliebigen der vorangegangenen Ansprüche, wobei die Oberfläche mit Gaußscher Krümmung ungleich null im Wesentlichen eine torische Form aufweist.

8. Ophthalmische Vorrichtung (1) nach einem beliebigen der vorangegangenen Ansprüche, wobei die Schutzschicht (3) mittels einer optisch transparenten Klebeschicht (4) mit einer Stärke zwischen 0,01 mm und 0,5 mm auf die Korrekturlinse (2) aufgebracht ist.

9. Ophthalmische Vorrichtung (1) nach einem beliebigen der vorangegangenen Ansprüche, umfassend eine gehärtete Glasschicht (5), die auf die Schutzschicht (3) auf der im Verhältnis zur Korrekturlinse (2) gegenüberliegenden Seite aufgebracht ist.

10. Ophthalmische Vorrichtung (1) nach einem beliebigen der vorangegangenen Ansprüche, umfassend eine auf die Schutzschicht (3) aufgebrachte Depolarisationsschicht (6).

11. Ophthalmische Vorrichtung (1) nach einem beliebigen der vorangegangenen Ansprüche, wobei die Schutzschicht (3) eine Mehrschichtstruktur ist, die der Reihenfolge nach Folgendes umfasst: ein Substrat (32), eine transparente leitfähige Schicht (33), eine Ausrichtungsschicht (34), eine Flüssigkristallschicht (31), eine Ausrichtungsschicht (34), eine transparente leitfähige Schicht (33), ein Substrat (32).

12. Ophthalmische Vorrichtung (1) nach einem beliebigen der vorangegangenen Ansprüche, wobei die Flüssigkristallschicht (31) entlang eines äußeren Umfangs derselben von einer Dichtung (7) umgeben ist.

## Revendications

1. Dispositif ophtalmique (1) comprenant :
- une paire de lentilles correctrices (2) de défauts visuels, ayant une surface et une surface opposée, dans laquelle la surface présente une courbure gaussienne non nulle, et la surface opposée présente une courbure gaussienne nulle ;
- au moins une couche protectrice (3) contre la lumière ambiante, dans laquelle ladite couche protectrice présente une transmittance variable commandée par un signal électrique, et est couplée à ladite lentille correctrice (2) au niveau de la surface opposée à courbure gaussienne nulle, ladite couche protectrice (3) étant un panneau de cristaux liquides de type Guest-Host (Invité-Hôte) ;
- un dispositif de commande (8) avec un circuit électronique (81) alimenté principalement par au moins une cellule photovoltaïque (82), ledit dispositif de commande (8) étant apte à générer le signal électrique de commande de la transmittance de la couche protectrice (3) ;
**caractérisé en ce que** lesdites lentilles correctrices (2) sont réalisées d'une seule pièce avec un support (9), dans lequel la surface opposée à courbure gaussienne nulle est une surface commune aux lentilles correctrices (2) et au support (9), et la couche protectrice (3) s'étend de manière à recouvrir les deux lentilles correctrices (2).

2. Dispositif ophtalmique (1) selon la revendication 1, dans lequel le support (9) entoure complètement les deux verres correcteurs (2).

3. Dispositif ophtalmique (1) selon la revendication 1 ou 2, dans lequel ledit support (9) est pourvu d'une partie centrale supérieure (92) dans laquelle le dispositif de contrôle de transmittance (8) est logé.

4. Dispositif ophtalmique (1) selon l'une quelconque des revendications précédentes, dans lequel ledit support (9) est relié à un cadre (10) ayant une paire de branches pliables (11), ledit cadre (10) étant pourvu d'un compartiment dans lequel le dispositif de commande (8) est logé.

5. Dispositif ophtalmique (1) selon la revendication 4, dans lequel ledit compartiment est disposé au centre au-dessus des lentilles correctrices (2) et est étanche et protège le dispositif de commande (8).

6. Dispositif ophtalmique (1) selon l'une quelconque des revendications précédentes, dans lequel la surface à courbure gaussienne nulle est cylindrique.

7. Dispositif ophtalmique (1) selon l'une quelconque des revendications précédentes, dans lequel la surface à courbure gaussienne non nulle est de forme sensiblement torique.

8. Dispositif ophtalmique (1) selon l'une quelconque des revendications précédentes, dans lequel la couche protectrice (3) est appliquée sur la lentille correctrice (2) au moyen d'une couche de colle optiquement transparente (4) ayant une épaisseur comprise entre 0,01 mm et 0,5 mm.

9. Dispositif ophtalmique (1) selon l'une quelconque des revendications précédentes, comprenant une couche de verre trempé (5), appliquée sur la couche protectrice (3) sur le côté opposé par rapport à la lentille correctrice (2).

10. Dispositif ophtalmique (1) selon l'une quelconque des revendications précédentes, comprenant une couche dépolarisante (6) appliquée sur la couche protectrice (3).

11. Dispositif ophtalmique (1) selon l'une quelconque des revendications précédentes, dans lequel la couche protectrice (3) est une structure multicouche comprenant dans l'ordre : un substrat (32), une couche conductrice transparente (33), une couche d'alignement (34), une couche de cristaux liquides (31), une couche d'alignement (34), une couche conductrice transparente (33), un substrat (32).

12. Dispositif ophtalmique (1) selon l'une quelconque des revendications précédentes, dans lequel la couche de cristaux liquides (31) est entourée, le long d'un périmètre extérieur de celle-ci, par un joint d'étanchéité (7).
